# EUROPÄISCHE PATENTANMELDUNG

(11) **EP 0 875 421 A1**
(43) Veröffentlichungstag der Anmeldung: **04.11.1998**
(21) Anmeldenummer: 98106878.6
(22) Anmeldetag: 16.04.1998
(51) Int. Cl.: B60P 1/43, B60P 1/44

(54) **Brückenelement, wie Ladebordwand, Überfahrbrücke od. dgl.**

(30) Priorität: 30.04.1997 DE 29707803 U
(71) Anmelder: Peter Maier Leichtbau GmbH, 78224 Singen (DE)
(72) Erfinder: Marder, Bruno, 78761 Waldshut (DE)
(74) Vertreter: Weiss, Peter, Dr. rer. nat.

(57) **Zusammenfassung**

Bei einem Brückenelement, wie Ladebordwand (R), Überfahrbrücke od. dgl., das insgesamt oder von dem ein Teil (2) schwenkbar mit einem Bauelement oder einem anderen Teil (1) verbunden ist, ist zwischen dem Bauelement bzw. dem einen Teil (2) und dem Brückenelement bzw. dem anderen Teil (1) ein Federelement (4.1, 4.2) angeordnet, welches dann entspannt ist, wenn sich das Brückenelement (R) oder das eine Teil (2) des Brückenelements in senkrechter Lage befindet.

## Beschreibung

Die Erfindung betrifft ein Brückenelement, wie Ladebordwand, Überfahrbrücke od. dgl., das insgesamt oder von dem ein Teil schwenkbar mit einem Bauelement oder einem anderen Teil verbunden ist.

Ladebordwände sind in vielfältiger Form und Ausführung bekannt und auf dem Markt. In der Regel ist ihnen eine komplizierte Hydraulik zugeordnet, welche ein Schwenken, Absenken und Anheben der Ladebordwand bewirkt. Diese Hydraulik bedeutet für eine kleine Ladebordwand oder bspw. auch für eine schwenkbare Überfahrfläche, die von einer Mauer auf eine Lastwagenpritsche geklappt wird, einen erheblichen Aufwand. Deshalb wird sie dort nicht verwandt, sondern die Ladebordwand bzw. die Überfahrfläche muss von der Bedienperson geschwenkt werden. Dies gilt auch, wenn bspw. die Ladebordwand aus zwei Teilen besteht, die zusammenlegbar sind.

Heute besagt eine Richtlinie der EU, dass eine Person kein höheres Gewicht als 25 kg heben soll. Ladebordwände, Teile von Ladebordwänden bzw. Überfahrbrücken besitzen jedoch oftmals ein höheres Gewicht, so dass es bereits aus rechtlichen Gründen notwendig wird, für ein derartiges Bauteil eine Schwenkhilfe anzubieten, die ein Anheben des Bauteils weitgehend unterstützt.

Der vorliegenden Erfindung liegt die Aufgabe zugrunde, eine derartige Hilfe für das Verschwenken einer Ladebordwand, Teile einer Ladebordwand, einer Überfahrbrücke od. dgl. zu schaffen, die möglichst einfach aufgebaut ist, aber das Verschwenken sehr wirkungsvoll unterstützt.

Zur Lösung dieser Aufgabe führt, dass zwischen dem Bauelement bzw. dem einen Teil und dem Brückenelement bzw. dem anderen Teil ein Federelement angeordnet ist, welches dann entspannt ist, wenn sich das Brückenelement oder das eine Teil des Brückenelementes in senkrechter Lage befindet.

Der wesentliche Vorteil der vorliegenden Erfindung liegt darin, dass dieses Federelement das Brückenelement bzw. das eine Teil des Brückenelements nach beiden Seiten hin abfedert bzw. ein Anheben dieses Brückenelements bzw. des einen Teils unterstützt.

Die Erfindung soll bei allen möglichen Brückenelementen angewandt werden können, die schwenkbar mit irgendeinem Bauelement verbunden sind. Hierzu zählen insbesondere alle Überfahrbrücken, die bspw. an einer Anfahrrampe eines Lagers festliegen. Vor allem aber soll die Erfindung für Ladebordwände gelten, die bspw. an einer Ladepritsche eines LKW's angeordnet sind. Ferner gilt die Erfindung insbesondere für Ladebordwände, die aus mehreren Teilen bestehen, die miteinander faltbar verbunden sind. Die Aufzählung soll jedoch nicht den Erfindungsgedanken auf eine bestimmte Anwendung beschränken.

Erfindungsgemäss besteht das Federelement aus einem Torsionsstab und einem etwa rechtwinklig dazu angeordneten Gleitstab. Gleitstab und Torsionsstab sind über eine Federschlaufe miteinander verbunden. Vom Torsionsstab ist wiederum endwärtig ein Stützhaken abgebogen, der in Gebrauchslage die auf den Torsionsstab einwirkenden Torsionskräfte auffängt.

Wird ein derartiges Federelement einerseits mit einem Bauelement bzw. dem einen Teil einer Ladebordwand und andererseits mit dem Brückenelement oder einem anderen Teil dieses Brückenelements verbunden, wobei es die Schwenkachse überbrückt, so werden bei einem Schwenken des Gleitstabes und einem gleichzeitigen Festlegen des Stützhakens durch den Torsionsstab Rückstellkräfte erzeugt, die den Gleitstab in eine gewünschte Ausgangslage bringen. In dieser Ausgangslage ist das Federelement entspannt. Um dies dann zu gewährleisten, wenn sich das eine Teil in einer senkrechten Lage befindet, sollte der Stützhaken etwa senkrecht zu dem Gleitstab verlaufen.

Damit der Stützhaken nicht alleine die Torsionskräfte aufnehmen muss, hat es sich als ratsam erwiesen, wenn er in einen Fixierblock eingesetzt wird, der wiederum in Gebrauchslage in einer Profilkammer in dem Bauelement oder dem anderen Teil angeordnet ist. Der Fixierblock dient zu einer besseren Abstützung des Stützhakens.

Ferner hat es sich als ratsam erwiesen, den Torsionsstab nicht freihängend in der Profilkammer anzuordnen, sondern ihn über einen Stützblock abzustützen. Dabei kann dieser Stützblock aus zwei Teilen bestehen, die den Torsionsstab in geeigneter Weise umfangen.

Ferner durchbohrt der Gleitstab einen Halteblock und ist in diesem Halteblock so geführt, dass er mit Spiel gleiten kann.

Hierdurch werden Massänderungen beim Schwenken der Ladebordwand od. dgl. ausgeglichen. Der Halteblock wiederum sitzt in einer weiteren Profilkammer in dem einen Teil bzw. dem Bauelement.

Diese einfache Ausgestaltung hat vor allem auch den Vorteil, dass ein Einsetzen oder Herausnehmen des Federelementes aus der Ladebordwand bzw. dem Bauelement sehr einfach ist. Der Torsionsstab wird in der Profilkammer mit dem Stützblock und dem Fixierblock geführt, so dass er zusammen mit diesen Elementen in die Profilkammer eingesetzt werden kann. Der Halteblock wiederum gleitet entlang dem Gleitstab, wodurch auf einfache Weise seine ihm zugeordnete Profilkammer gefunden und der Halteblock in diese Profilkammer eingesezt werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf eine Ladebordwand, die aus zwei Teilen besteht;
Figur 2 eine Stirnansicht eines erfindungsgemässen Federelementes;
Figur 3 eine Draufsicht auf ein erfindungsgemässes Federelement mit weiteren zugehörigen Bauteilen;
Figur 4 eine Draufsicht auf einen erfindungsgemässen Fixierblock;
Figur 5 eine Seitenansicht des Fixierblockes gemäss Figur 4;
Figur 6 eine Draufsicht auf einen erfindungsgemässen Stützblock;
Figur 7 eine Stirnansicht des Stützblockes gemäss Figur 6;
Figuren 8 bis 10 Seitenansichten der Ladebordwand gemäss Figur 1 in unterschiedlichen Gebrauchslagen.

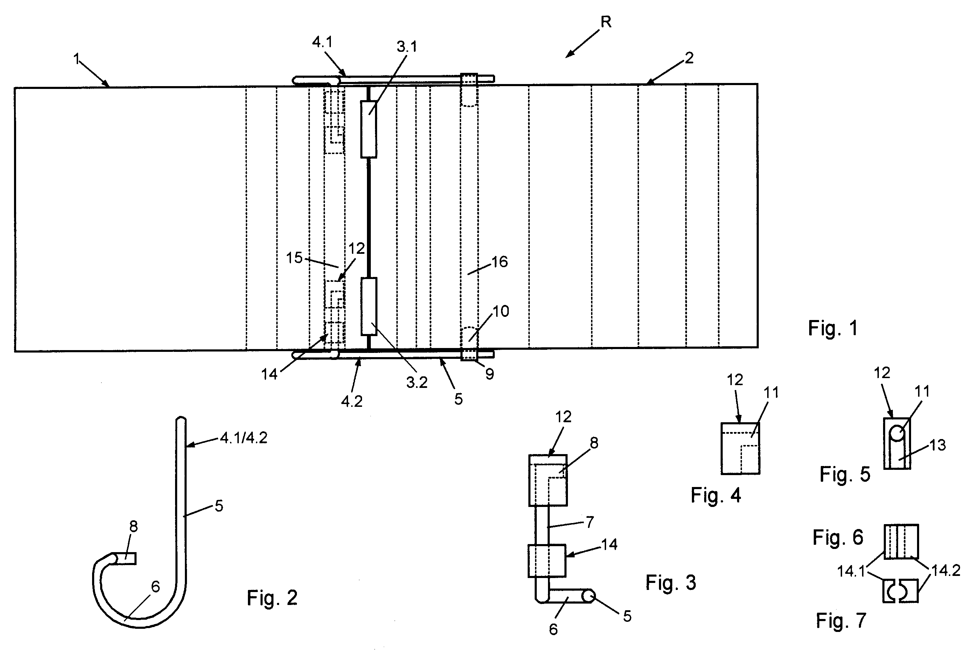

Gemäss Figur 1 besteht eine Ladebordwand R aus zwei Teilen 1 und 2, die miteinander über Gelenke 3.1 und 3.2 so verbunden sind, dass das Teil 2, wie in den Figuren 7 bis 9 gezeigt, gegenüber dem Teil 1 in Richtung des Doppelpfeiles verschwenkbar ist.

Erfindungsgemäss ist seitlich jeweils ein Federelement 4.1 und 4.2 vorgesehen, welches die beiden Teile 1 und 2 überbrückt und jeweils endwärtig mit dem Teil 1 bzw. dem Teil 2 verbunden ist. Da beide Federelemente gleich ausgebildet sind, wird nur ein Federelement anhand von Figur 2 beschrieben. Das Federelement 4.1/4.2 weist einen Gleitstab 5 auf, der über eine Federschlaufe 6 mit einem Torsionsstab 7 (siehe Figur 3) verbunden ist. Von diesem Torsionsstab 7 ist endwärtig ein Stützhaken 8 abgebogen.

Wie insbesondere in Figur 1 erkennbar, greift der Gleitstab 5 in Gebrauchslage durch eine Bohrung 9 in einen Halteblock 10 und ist in dieser Bohrung 9 mit Spiel geführt.

Der Torsionsstab 7 greift mit dem Stützhaken 8 in eine weitere Bohrung 11 in einem Fixierblock 12 (siehe Figur 4 und 5) ein und ist so drehfest mit diesem Fixierblock 12 verbunden. Dabei wird bevorzugt ein Teil des Torsionsstabes 7 in eine Mulde 13 eingelegt, die dem Fixierblock 12 seitlich eingeformt ist.

Für eine später beschriebene Abstützung des Torsionsstabs 7 ist noch ein Stützblock 14 vorgesehen, der, wie in den Figuren 6 und 7 gezeigt, aus zwei Teilen 14.1 und 14.2 besteht, die zusammengesetzt werden können und dabei mit einer entsprechenden Innenkontur den Torsionsstab 7 umfassen.

Die Funktionsweise der vorliegenden Erfindung ist folgende:

Zum Einsetzen des Federelementes 4 wird auf den Torsionsstab 7 bzw. den Stützhaken 8 der Fixierblock 12 aufgesetzt. Danach wird der Fixierblock 12 in eine Profilkammer 15 in dem Teil 1 der Ladebordwand R eingeschoben. Ferner werden die beiden Teile 14.1 und 14.2 des Stützblockes 14 um den Torsionsstab 7 angeordnet und ebenfalls in die Profilkammer 15 eingeschoben. Dem Gleitstab 5 wird der Halteblock 10 aufgeschoben. Sodann wird der Halteblock 10 in eine weitere Profilkammer 16 in dem anderen Teil 2 der Ladebordwand R eingesetzt.

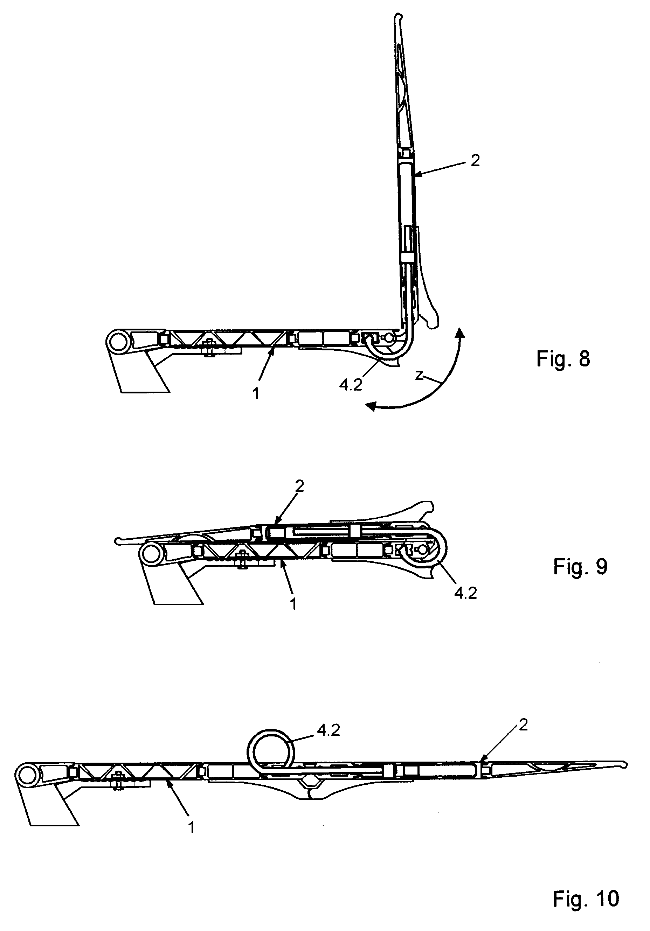

Da der Stützhaken 8 etwa, wie in Figur 2 erkennbar, senkrecht zu dem Gleitstab 5 verläuft, befindet sich das Federelement 4.1/4.2 dann in einer entspannten Lage, wenn auch die Teile 1 und 2 zueinander senkrecht verlaufen, wie dies in Figur 8 angedeutet ist.

Wird nun das Teil 2 um die Gelenke 3.1 und 3.2 entgegen dem Uhrzeigersinn in Schwenkrichtung z geschwenkt, so geschieht dies gegen die Festlegung des Stützhakens 8 in dem Fixierblock 12 bzw. in der Profilkammer 15. Auf den Stab 7 wirken Torsionskräfte, die einem Schwenken des Teils 2 entgegenwirken, wobei die Federschlaufe 6 einen gewissen Ausgleich vornehmen kann. Diese Rückstellkräfte des Torsionsstabes 7 sind umso höher, je weiter sich das Teil 2 in Schwenkrichtung z entgegen dem Uhrzeigersinn bewegt und sind dann am höchsten, wenn sich das Teil 2 in der in Figur 9 gezeigten Endlage befindet.

Soll nun das Teil 2 wieder in die in Figur 8 gezeigte senkrechte Stellung bewegt werden, so unterstützt das Federelement 4.1/4.2 diese Bewegung im Uhrzeigersinn in der Schwenkrichtung z, und zwar anfänglich, wenn das Gewicht der Ladebordwand noch am höchsten ist, besonders stark.

Die gleiche Wirkung übt das Federelement 4.1/4.2 aus, wenn das Teil 2 in die in Figur 10 gezeigte Gebrauchslage bewegt wird. Das bedeutet, dass die Bedienperson weder in der einen noch in der anderen Endlage des Teils 2 der Ladebordwand R erhebliche Kräfte aufwenden muss, um dieses Teil 2 in die senkrechte Position zu bringen. In der senkrechten Position ruht aber das gesamte Gewicht des Teils 2 auf dem Gelenk 3.1/3.2, so dass ein Bewegen des Teils 2 aus dieser vertikalen Lage ebenfalls keine Anstrengung für die Bedienperson bedeutet.

### Positionszahlenliste

- 1: Teil
- 2: Teil
- 3: Gelenk
- 4: Federelement
- 5: Gleitstab
- 6: Federschlaufe
- 7: Torsionsstab
- 8: Stützhaken
- 9: Bohrung
- 10: Halteblock
- 11: Bohrung
- 12: Fixierblock
- 13: Mulde
- 14: Stützblock
- 15: Profilkammer
- 16: Profilkammer
- R: Ladebordwand
- z: Schwenkrichtung

## Patentansprüche

1. Brückenelement, wie Ladebordwand (R), Überfahrbrücke od. dgl., das insgesamt oder von dem ein Teil (2) schwenkbar mit einem Bauelement oder einem anderen Teil (1) verbunden ist,
dadurch gekennzeichnet,
dass zwischen dem Bauelement bzw. dem einen Teil (2) und dem Brückenelement bzw. dem anderen Teil (1) ein Federelement (4.1, 4.2) angeordnet ist, weiches dann entspannt ist, wenn sich das Brückenelement (R) oder das eine Teil (2) des Brückenelements in senkrechter Lage befindet.

2. Brückenelement nach Anspruch 1, dadurch gekennzeichnet, dass das Federelement (4.1, 4.2) aus einem Torsionsstab (7) und einem etwa rechtwinklig dazu angeordneten Gleitstab (5) besteht.

3. Brückenelement nach Anspruch 2, dadurch gekennzeichnet, dass der Gleitstab (5) und Torsionsstab (7) über eine Federschlaufe (6) miteinander verbunden sind.

4. Brückenelement nach Anspruch 2 oder 3, dadurch gekennzeichnet, dass vom Torsionsstab (7) endwärtig ein Stützhaken (8) abgebogen ist.

5. Brückenelement nach Anspruch 4, dadurch gekennzeichnet, dass der Stützhaken (8) in eine Bohrung (11) in einem Fixierblock (12) eingreift.

6. Brückenelement nach Anspruch 4 oder 5, dadurch gekennzeichnet, dass der Stützhaken (8) etwa senkrecht zu dem Gleitstab (5) angeordnet ist.

7. Brückenelement nach Anspruch 6, dadurch gekennzeichnet, dass der Fixierblock (12) in eine Profilkammer (15) in dem Bauelement oder dem Teil (1) eingesetzt ist.

8. Brückenelement nach Anspruch 7, dadurch gekennzeichnet, dass der Torsionsstab (7) in der Profilkammer (15) von einem aus zwei Teilen bestehenden Stützblock (14) umfangen ist.

9. Brückenelement nach wenigstens einem der Ansprüche 1 bis 8, dadurch gekennzeichnet, dass auf den Gleitstab (5) ein Halteblock (10) aufgeschoben ist, wobei der Gleitstab (15) eine Bohrung (9) in dem Halteblock (10) mit Spiel durchgreift.

10. Brückenelement nach Anspruch 9, dadurch gekennzeichnet, dass der Halteblock (10) in eine weitere Profilkammer (16) in dem Teil (2) oder dem Bauelement eingesetzt ist.
